# EUROPÄISCHE PATENTSCHRIFT

(11) **EP 1 519 598 B1**
(45) Veröffentlichungstag und Bekanntmachung des Hinweises auf die Patenterteilung: **17.10.2007**
(21) Anmeldenummer: 03425632.1
(22) Anmeldetag: 29.09.2003
(51) Int. Cl.: H04Q 7/22, H04L 1/18

(54) **Senden einer Information (NACK) von einem Teilnehmer-Endgerät bezüglich des Empfangs eines Datenblocks in einem Punkt-zu-Multipunkt-Funkübertragungssystem**
Sending of information (NACK) from a subscriber terminal with respect to the reception of a data packet in a point-to-multipoint radio transmission system
Transmission d'une information (NACK) provenant d'un terminal abonné relatif à la réception d'un paquet de données dans un système de transmission "point à multipoint"

(43) Veröffentlichungstag der Anmeldung: 30.03.2005
(73) Patentinhaber: NOKIA SIEMENS NETWORKS GMBH & CO. KG, 81541 München (DE); Siemens S.p.A., 20126 Milano (IT)
(72) Erfinder: Mademann, Frank, 13189 Berlin (DE); Parolari, Sergio, 20133 Milano (IT); Traynard, Jean-Michel, 81667 München (DE)
(74) Vertreter: Giustini, Delio

(56) Entgegenhaltungen:
- WO-A-99/59355
- WO-A-03/005631
- US-A- 6 128 483
- US-A1- 2002 057 663
- US-B1- 6 466 552

## Beschreibung

Die Erfindung betrifft ein Verfahren zur Übertragung von Daten in einem Funk-Kommunikationssystem, insbesondere in einem Mobilfunksystem. Ferner betrifft die Erfindung ein Funk-Kommunikationssystem, eine Basisstation sowie ein Teilnehmer-Endgerät zur Durchführung des erfindungsgemäßen Verfahrens.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmer-Endgeräten, wobei die Teilnehmer-Endgeräte Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Weiterbildungen basierend auf dem GSM-System, unter den Begriffen GPRS oder EDGE bekannt, zur Übertragung von höheren Datenraten werden als 2,5. Generation bezeichnet. Funk-Kommunikationssysteme, wie beispielsweise UMTS (Universal Mobile Telecommunication System) oder andere Systeme der dritten Generation sind im Vergleich zur zweiten Generation für noch höhere Datenraten ausgelegt. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in jeweils unterschiedlichen Frequenzbändern Anwendung, wobei sie jeweils ein so genanntes CDMA-Teilnehmerseparierungsverfahren (Code Division Multiple Access) unterstützen.

Im Rahmen der Standardisierung von Netzwerkfunktionalitäten des UTRAN (UMTS Terrestrial Radio Access Network) und GERAN (GSM EDGE Radio Access Network) durch 3GPP (3^{rd} Generation Partnership Project) wird die Unterstützung eines so genannten MBMS (Multimedia Broadcast/Multicast Service) definiert. Näheres hierzu ist den technischen Spezifikationen 3GPP TS 22.146 V6.2.0 (2003-03) und 3GPP TS 23.246 V1.1.0 (2003-07) entnehmbar. Ziel des MBMS ist es, Multimedia-Daten mit einer typischerweise hohen Datenrate mittels einer unidirektionalen Punkt-zu-Multipunkt-Übertragung gleichzeitig einer Vielzahl von Teilnehmern über gemeinsam genutzte Kanäle zur Verfügung stellen zu können, wobei vorzugsweise pro Funkzelle nur ein MBMS-Funkkanal verwendet wird. Vorteilhaft wird hierdurch eine vielfache Übertragung gleicher Daten auf mehreren Punkt-zu-Punkt-Verbindungen bzw. Kanälen vermieden.

MBMS unterscheidet zwischen zwei Anwendungen der Multimediadatenübertragung, Multicast und Broadcast. Ein Multicast-Dienst stellt dabei einen unidirektionalen Punkt-zu-Multipunkt-Dienst dar, in dem Daten ausschließlich von Teilnehmern einer Gruppe, die entsprechende Berechtigungen zum Empfang dieses Dienstes, beispielsweise aufgrund eines Abonnements, haben, empfangen werden können. Im Gegensatz hierzu können bei einem Broadcast-Dienst alle Teilnehmer, die sich in dem Bereich der Ausstrahlung des Dienstes befinden, Daten dieses Dienstes empfangen. Weitere Definitionen und Beschreibungen der Unterschiede können unter anderem den Kapiteln 3.1, 4.1 und 4.2 der oben genannten TS22.146 entnommen werden.

Ein fehlerfreier Empfang der Daten wird durch eine senderseitige so genannte Forward Error Correction (FEC), d.h. durch ein Hinzufügen von Redundanz, sowie eine hohe Sendeleistung sichergestellt. Trotz dieser Vorkehrungen kann jedoch insbesondere bei Teilnehmern, die sich in einer großen Entfernung von der sendenden Basisstation befinden oder deren Empfang durch Abschattungen oder hohe Interferenz beeinträchtigt wird, der Fall auftreten, dass Datenblöcke nicht korrekt empfangen bzw. detektiert werden können. Dies ist insbesondere aus Sicht von für einen Multicast-Dienst Gebühren zahlende Teilnehmer nicht akzeptabel. Nachteilig ist zudem, dass die Forward Error Correction unabhängig von variierenden Empfangsverhältnissen realisiert wird und somit Übertragungsressourcen nicht effizient genutzt werden können, und dass aufgrund der konstant hohen Sendeleistung eine starke Interferenzbeeinflussung paralleler Signalübertragungen auftritt.

Aus der US-A-2002/0057663 ist ein Verfahren bekannt, bei dem Multicast- und Broadcastdaten als Paketdaten von einem Internet-Server über ein CDMA-Funknetz zu Teilnehmerstationen übertragen werden. Dabei sendet jede Teilnehmerstation, die einen fehlerhaften Empfang eines Datenpakets über die Funkverbindung registriert, eine entsprechende Antwortnachricht zurück an den Sender des Datenpakets.

Aus der WO-A-01/37480 ist ein Übertragungssystem bekannt, bei dem von einer ersten Station Datenpakete über ein Netzwerk, wie beispielsweise dem Internet, zu einer Mehrzahl von zweiten Stationen übertragen und Rückmeldungen dieser zweiten Stationen zu dem Empfang der Datenpakete empfangen werden. Um eine Überlast des Netzwerkes aufgrund der Rückmeldungen zu vermeiden, sendet die erste Station wiederholt Rückmeldeanforderungen umfassend einen so genannten Rückmeldewahrscheinlichkeitswert sowie eine Information über den bis dahin zurückgemeldeten schlechtesten Empfangsstatus. Die zweiten Stationen senden abhängig von dem Rückmeldewahrscheinlichkeitswert und nur, wenn der Empfangsstatus schlechter als der signalisierte ist, eine Rückmeldung zu der ersten Station.

Aus der US-A-6 128 483 ist ein Verfahren bekannt, bei dem an eine Gruppe von Mobilstationen adressierte Daten rundgesendet werden, ohne dass die betroffenen Mobilstationen eine Bestätigung hierzu zurücksenden. Lediglich mit der letzten Rundsendeübertragung fordert der Übertragungsmanager eine Bestätigung durch die Mobilstationen an, welche anschließend von einer Mobilstation nach der anderen zu dem Übertragungsmanager gesendet werden.

Aufgabe der Erfindung ist es daher, ein Verfahren sowie Systemkomponenten anzugeben, die einen verbesserten Empfang von Daten bei effizienterer Nutzung von Übertragungsressourcen ermöglichen. Diese Aufgabe wird durch das Verfahren, das Funk-Kommunikationssystem, die Basisstation sowie das Teilnehmer-Endgerät gemäß den Merkmalen der unabhängigen Patentansprüche gelöst. Vorteilhafte Weiterbildungen sind den jeweiligen abhängigen Patentansprüchen entnehmbar.

Erfindungsgemäß wird von einer Basisstation eines Funk-Kommunikationssystems zumindest ein Datenblock zu einer Anzahl von Teilnehmer-Endgeräten gemäß einer Punkt-zu-Multipunkt-Übertragung sowie eine explizite Anforderung zur Signalisierung einer Information bezüglich des jeweiligen Empfangs des Datenblocks zu einer ausgewählten Gruppe der Anzahl empfangender Teilnehmer-Endgeräte gesendet. Von der Basisstation wird anschließend in Abhängigkeit der von der ausgewählten Gruppe Teilnehmer-Endgeräte empfangenen Information bezüglich des jeweiligen Empfangs des Datenblocks zumindest eine nochmalige Übertragung des Datenblocks initiiert.

Mittels der erfindungsgemäßen expliziten Anforderung (engl. polling) wird eine Gruppe von Teilnehmer-Endgeräten ausgewählt, dessen Empfangssituation ausgewertet werden soll. Dies ist insbesondere vorteilhaft, wenn aufgrund einer großen oder über einem gegebenen Schwellwert liegenden Anzahl Teilnehmer-Endgeräte die Wahrscheinlichkeit von Kollisionen hoch ist. Die Anzahl Teilnehmer-Endgeräte kann beispielsweise bereits beim Aufbau des MBMS netzseitig zumindest grob ermittelt werden.

Die angeforderte Information kann dabei einer Statusinformation entsprechen. Vorteilhaft wird hierdurch ein Mechanismus eingeführt, der es ermöglicht, netzseitig Statusinformationen von Teilnehmer-Endgeräten zu erfassen, auszuwerten und gegebenenfalls Maßnahmen beispielsweise zur Anpassung der Datenübertragung abzuleiten.

Besonders vorteilhaft wird das Verfahren für die Übertragung des Datenblocks in einem einem Broadcast- und/oder Multicast Dienst zugeordneten Kanal, wie es einleitend beschrieben wurde, eingesetzt.

Einer Ausgestaltung der Erfindung zufolge wird die Information bezüglich des Empfangs des Datenblocks in einem von einer Anzahl von Teilnehmer-Endgeräten gemeinsam genutzten Kanal zu der Basisstation signalisiert.

Im Gegensatz zu bekannten Punkt-zu-Punkt-Verbindungen, bei denen beispielsweise ARQ-Mechanismen (Automatic Repeat Request) eingesetzt werden, ist durch die erfindungsgemäße Nutzung eines gemeinsamen Kanals kein Aufbau einer der Anzahl Teilnehmer-Endgeräten entsprechenden Anzahl von Kanälen zur Übertragung von Informationen erforderlich, wodurch vorteilhaft die begrenzte Anzahl von Funkressourcen effizienter genutzt werden kann. Als Kanal kann dabei beispielsweise ein allgemeiner Signalisierungskanal (engl. Common Channel) oder ein dezidierter Kanal (engl. Dedicated Channel, DCH) verwendet werden, wobei letzterer vorteilhaft Störungen oder eine Überlastung des allgemeinen Signalisierungskanals vermeidet. Die auf dem Kanal signalisierten Informationen werden beispielsweise in einer der Basisstation übergeordneten Basisstations-Steuerung, speziell in der so genannten Funkverbindungssteuerung (engl. Radio Link Control, RLC) ausgewertet.

Gemäß einer weiteren Weiterbildung der Erfindung wird als Information ein Zugriffsfunkblock oder ein zumindest eine Anzahl von Eigenschaften eines Zugriffsfunkblocks aufweisender Signalisierungsfunkblock von dem Teilnehmer-Endgerät zu der Basisstation übertragen.

Ein derartiger Zugriffsfunkblock (engl. Access Burst) weist den Vorteil auf, dass er aufgrund einer langen Trainingssequenz empfängerseitig gut detektierbar ist, auch wenn aufgrund eines gleichzeitigen Zugriffs auf den gemeinsamen Kanal Kollisionen der Signalisierungen auftreten. Weiterhin ist ein Zugriffsfunkblock derart aufgebaut, dass eine genaue Anpassung des sendenden Teilnehmer-Endgerätes auf die Zeitstruktur der Basisstation nicht erforderlich ist. Insbesondere bei einem Einsatz der Erfindung in einem TDMA-basierten System wird hierdurch der vorteilhafte Einsatz des Verfahrens möglich, selbst wenn aufgrund einer aktuell nicht bestehenden bidirektionalen Kommunikation keinerlei zeitliche Synchronisation (so genanntes Timing Advance) des Teilnehmer-Endgerätes durch die Basisstation erfolgen kann. Im Fall eines CDMA-basierten Systems kann eine empfangsseitige Trennung von Informationen mehrerer Teilnehmer-Endgeräte beispielsweise durch eine Nutzung unterschiedlicher Spreizcodes erfolgen, wobei die Spreizcodes beispielsweise zufallsgesteuert von den Teilnehmer-Endgeräten gewählt werden.

Einer weiteren Weiterbildung der Erfindung zufolge signalisiert die Information einen nicht korrekten Empfang bzw. keinen Empfang des Datenblocks. Die Signalisierung nur in dem Fall, dass ein Datenblock nicht korrekt empfangen bzw. nicht detektiert wurde, verringert vorteilhaft die Signalisierungslast von Informationen. Die Basisstation bzw. das System empfängt beispielsweise nur Statusinformationen, die in Form der vorangehend beschriebenen Zugriffsfunkblöcke ausgeführt sein können. Ist hingegen beabsichtigt, anstelle oder zusätzlich zu den Statusinformationen eines nicht korrekten Empfangs weitere Informationen zu signalisieren, beispielsweise den korrekten Empfang für jeden Datenblock, so kann dies beispielsweise durch eine zeitliche Einteilung der Signalisierungsressource in Zeitschlitze, die einer jeweiligen Anzahl von Teilnehmer-Endgeräten zugeordnet werden, gesteuert werden.

Einer besonders vorteilhaften Weiterbildung der Erfindung zufolge wird abhängig von der empfangenen Information oder Statusanzeiger netzseitig zumindest eine nochmalige Übertragung des Datenblocks initiiert. Durch eine oder mehrere nochmalige Übertragungen des Datenblocks wird vorteilhaft ermöglicht, dass Teilnehmer-Endgeräte diesen Datenblock korrekt empfangen bzw. detektieren können. Bei der nochmaligen Übertragung kann dabei beispielsweise der Fehlerschutz oder die Sendeleistung der Basisstation erhöht werden. Bekannte Verfahren wie das so genannte Incremental Redundancy sind vorteilhaft einsetzbar.

Bei einer Aufteilung eines Datenblocks über eine Anzahl von Funkblöcken, gemäß GPRS beispielsweise über vier Funkblöcke, können hierzu korrespondierende vier Funkblöcke zur Signalisierung der Informationen zu der Basisstation von beispielsweise vier unterschiedlichen Teilnehmer-Endgeräten oder Gruppen von Teilnehmer-Endgeräten genutzt werden, sodass die Wahrscheinlichkeit von Kollisionen weiter vorteilhaft verringert wird. Alternativ erfolgt der Zugriff auf die Ressourcen zufallsgesteuert, beispielsweise gemäß dem bekannten ALOHA-Protokoll. Einer weiteren Alternative zufolge können die korrespondierenden Funkblöcke eines physikalischen Punkt-zu-Multipunkt-Kanales mehreren physikalischen Punkt-zu-Multipunkt-Kanälen zugeordnet sein, die gemeinsam einen logischen MBMS-Kanal bilden. D.h. Teilnehmer-Endgeräte, die Datenblöcke auf vier physikalischen Punkt-zu-Multipunkt-Kanälen empfangen, signalisieren die Informationen bezüglich des jeweiligen Empfangs der Datenblöcke in vier Unterressourcen eines gemeinsamen Rückkanals. Hierdurch muss vorteilhaft nicht für jeden aufgebauten physikalischen Punkt-zu-Multipunkt-Kanal ein gesonderter Rückkanal aufgebaut werden, und eine wiederum effizientere Nutzung der begrenzten Funkressourcen ermöglicht. Vorteilhaft lässt sich ferner die Übertragungsrate in für die Übertragung in Abwärtsrichtung zu den Teilnehmer-Endgeräten gegenüber der Übertragungsrate des Rückkanals erweitern, wenn von einer systembedingten Obergrenze der Summe von physikalischen Kanälen beider Übertragungsrichtungen ausgegangen wird.

Sollte beispielsweise aufgrund von Kollisionen der Informationen mehrerer Teilnehmer-Endgeräte ein Empfang bzw. Detektion der Informationen durch die Basisstation nicht möglich sein, so kann bereits die Detektion einer erhöhten Signalisierungslast auf dem Rückkanal dahingehend interpretiert werden, dass der gesendete Datenblock von einer Anzahl von Teilnehmer-Endgeräten nicht korrekt.empfangen wurde, und eine erneute Übertragung des Datenblocks initiiert werden. Die Detektion der erhöhten Signalisierungslast kann dabei beispielsweise mittels Messungen des Signalpegels in dem Rückkanal erfolgen.

Gemäß einer weiteren Weiterbildung der Erfindung erfolgt die Initiierung einer nochmaligen Übertragung eines Datenblocks abhängig von einem Dienst und/oder einem Dienst zugeordneten Parametern. Derartige Parameter können beispielsweise die Dienstgüte (engl. Quality of Service, QoS) betreffen, d.h. Vorgaben bezüglich beispielsweise einer maximal erlaubten Verzögerung (engl. Delay) oder Bit- bzw. Blockfehlerrate.

So genannte Echtzeit-Dienste (engl. Realtime) und Nicht-Echtzeit-Dienste (engl. Non-Realtime) stellen dabei unterschiedlichen Anforderungen an die Übertragung, die bei der Steuerung der wiederholten Übertragung berücksichtigt werden müssen. So sind bei einem Echtzeit-Dienst beispielsweise nur eine oder wenige nochmalige Übertragungen eines Datenblocks möglich, da ansonsten eine vorgegebene maximale Übertragungszeit nicht eingehalten werden kann, währenddessen bei NichtEchtzeit-Diensten durchaus eine höhere bzw. beliebige Anzahl von wiederholten Übertragungen bis zu einer korrekten Detektion durch alle empfangenden Teilnehmer-Endgeräte möglich ist. Sind die Anforderungen bezüglich der Bit- oder Blockfehlerrate gering, so ist ergänzend oder alternativ eine Vorgabe eines Schwellenwertes sinnvoll. Dieser Schwellenwert bezeichnet beispielsweise eine absolute oder relative Anzahl von empfangenen Informationen der Teilnehmer-Endgeräte, die überschritten werden muss, um wiederholte Übertragung des Datenblocks zu initiieren. Mit jeder wiederholten Übertragung kann dieser Schwellenwert gegebenenfalls verändert werden.

Die Übertragung eines nachfolgenden Datenblocks erfolgt gemäß einer weiteren Weiterbildung der Erfindung nach einem vorgegebenen Zeitintervall, in dem die Information des Teilnehmer-Endgerätes empfangen werden kann. D.h. es existiert eine definierte zeitliche Beziehung zwischen Übertragungszeitpunkt für einen Datenblock und dem Zeitpunkt, zu dem Teilnehmer-Endgeräte eine zugehörige Information senden dürfen.

Durch dieses Zeitintervall, das beispielsweise abhängig von einer maximal möglichen Verzögerung der Übertragung der Information aufgrund der Größe der Funkzelle der Basisstation dimensioniert wird, kann vorteilhaft von einer ansonsten erforderlichen Nummerierung der Datenblöcke bzw. der darauf bezogenen Informationen abgesehen werden, da sich die zeitliche Reihenfolge der Übertragung der Datenblöcke nicht ändert und die relative Lage von Datenblock und zugehöriger Statusinformation vorzugsweise unverändert bleibt. Empfängt die Basisstation eine oder mehrere Informationen beispielsweise bezüglich eines nicht korrekten Empfangs des Datenblocks, so wird der Datenblock wiederholt übertragen, bis keine oder nur eine bestimmte Anzahl von Informationen empfangen werden, und erst dann ein nachfolgender Datenblock gesendet.

Einer weiteren Weiterbildung zufolge wird die Sendeleistung der Basisstation abhängig von der empfangenen Information bezüglich des Empfangs des Datenblocks gesteuert. Nach dem Aufbau beispielsweise eines MBMS-Kanals erfolgt die Übertragung eines Datenblocks zunächst mit einer bestimmten Sendeleistung. Werden nachfolgend keine Informationen von den Teilnehmer-Endgeräten empfangen, wird die Sendeleistung reduziert.

Dieses Verfahren kann für nachfolgende Datenblöcke solange weitergeführt werden, bis ein oder eine bestimmte Anzahl von Informationen der Teilnehmer-Endgeräte empfangen wird. Übersteigt diese Anzahl einen vorgegebenen Schwellenwert, so wird die Sendeleistung entsprechend wieder erhöht. Durch die Verwendung von zwei Schwellenwerten kann dabei ein Bereich, in dem sich die Sendeleistungsregelung zwischen einer unteren und oberen bewegen kann, definiert werden, wobei die Schwellenwerte aufgrund der durch die Bewegung der Teilnehmer-Endgeräte bedingten variablen Empfangssituationen flexibel angepasst oder fest konfiguriert werden können. Im Vergleich zu der eingangs beschriebenen konstanten Sendeleistung der Basisstation können durch diese Weiterbildung vorteilhaft Interferenzbeeinflussungen paralleler Signalübertragungen verringert werden. Basierend auf dem Ergebnis dieser Sendeleistungssteuerung, der Anzahl von Statusinformationen oder des Empfangspegels auf dem Rückkanal kann ebenfalls die Sendeleistung der Teilnehmer-Endgeräte, beispielsweise durch Angabe einer maximal zu verwendenden Sendeleistung, mittels einer Signalisierung der Basisstation gesteuert werden, wodurch vorteilhaft wiederum die Interferenz auf der Funkschnittstelle verringert wird.

Das Funk-Kommunikationssystem, die Basisstation sowie das Teilnehmer-Endgerät weisen jeweils erfindungsgemäße Mittel auf, mit denen das Verfahren mit allen vorangehend beschriebenen Ausgestaltungen durchgeführt werden kann.

Nachfolgend wird die Erfindung anhand eines Ausführungsbeispiels näher erläutert. Es zeigen dabei
- FIG 1: ein Blockschaltbild eines beispielhaften Funk-Kommunikationssystems, und
- FIG 2: ein Ablaufdiagramm des erfindungsgemäßen Verfahrens.

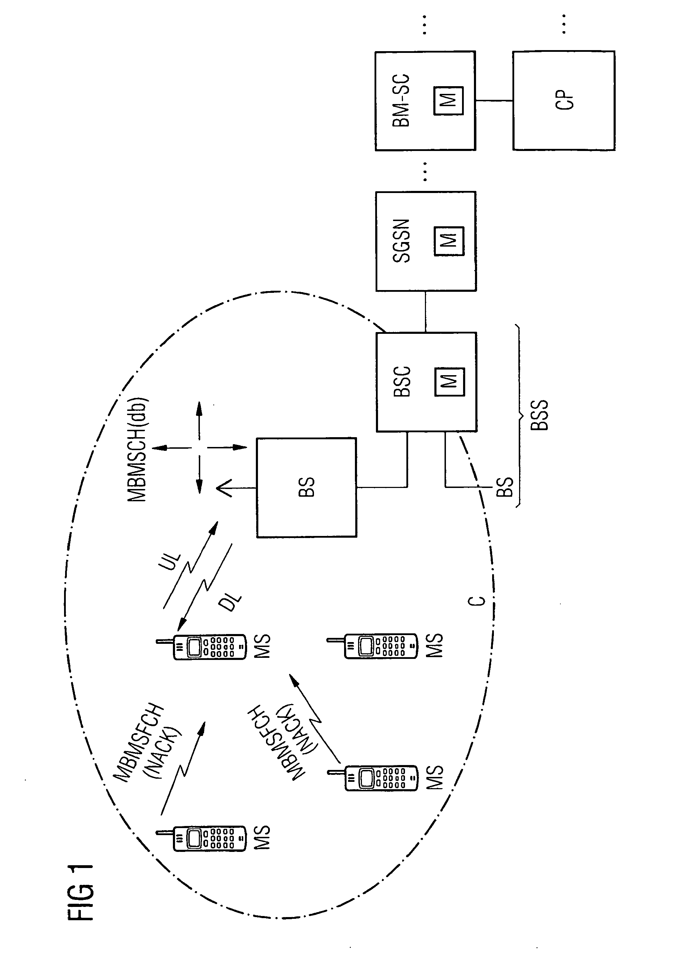

In der FIG 1 ist ein Blockschaltbild der Struktur eines bekannten Funk-Kommunikationssystems dargestellt, wie es beispielsweise in dem beschriebenen GSM- oder UMTS-Mobilfunksystem realisiert wird. Die oben genannte technische Spezifikation 3GPP TS 23.246 V1.1.0 (2003-07) zeigt in Kapitel 4.2 ein beispielhaftes Architektur-Referenzmodell, in dem die Erfindung zum Einsatz kommen kann. Einzelne Komponenten des Systems sind im Unterschied dazu in der FIG 1 entsprechend der bekannten GSM-Nomenklatur bezeichnet.

Eine zumindest eine Funkzelle C ausleuchtende Basisstation BS (Base Transceiver Station) ist über eine Basisstations-Steuerung BSC (Base Station Controller) mit einer nicht dargestellten Mobilvermittlungsstelle (MSC, Mobile Switching Center) verbunden. Die Basisstations-Steuerung BSC führt unter anderem eine zentrale Zuweisung der Funkressourcen mehrerer angeschlossener Basisstationen BS durch. Die Kombination aus Basisstationen BS und Basisstations-Steuerung BSC wird auch als Basisstationssystem BSS (Base Station System) bezeichnet. Jede Basisstation BS kann mittels zugewiesener Funkressourcen Verbindungen zu Teilnehmer-Endgeräten MS (Mobile Station), dieses sind beispielsweise mobile oder stationäre Endgeräte, aufbauen und auslösen. Dabei wird bei der Übertragung über die so genannte Funkschnittstelle zwischen der Aufwärts- UL (Uplink) und Abwärtsrichtung DL (Downlink) unterschieden.

Die Basisstations-Steuerung BSC ist weiterhin über einen so genannten SGSN (Serving GPRS Support Node) sowie GGSN (Gateway GPRS Support Node) mit einem BM-SC (Broadcast-Multicast Service Center) verbunden. Die Funktionalitäten dieser Einrichtungen sind unter anderem in den Kapiteln 5.1 und 5.4 der technischen Spezifikation 3GPP TS 23.246 V1.1.0 (2003-07) beschrieben. Das BM-SC dient dabei beispielsweise als Zugangsschnittstelle für Dienstanbieter CP (Service- oder Content-Provider) und zum Initiieren eines Aufbaus von MBMS-Kanälen sowie zur zeitlichen Steuerung der Datenübertragung auf diesen Kanälen. Der SGSN erfüllt hingegen Netzwerksteuerfunktionen für die Übertragung von MBMS-Daten. Weitere, hier nicht näher beschriebene Komponenten des Systems können ebenfalls zur Realisierung des MBMS-Dienstes genutzt werden.

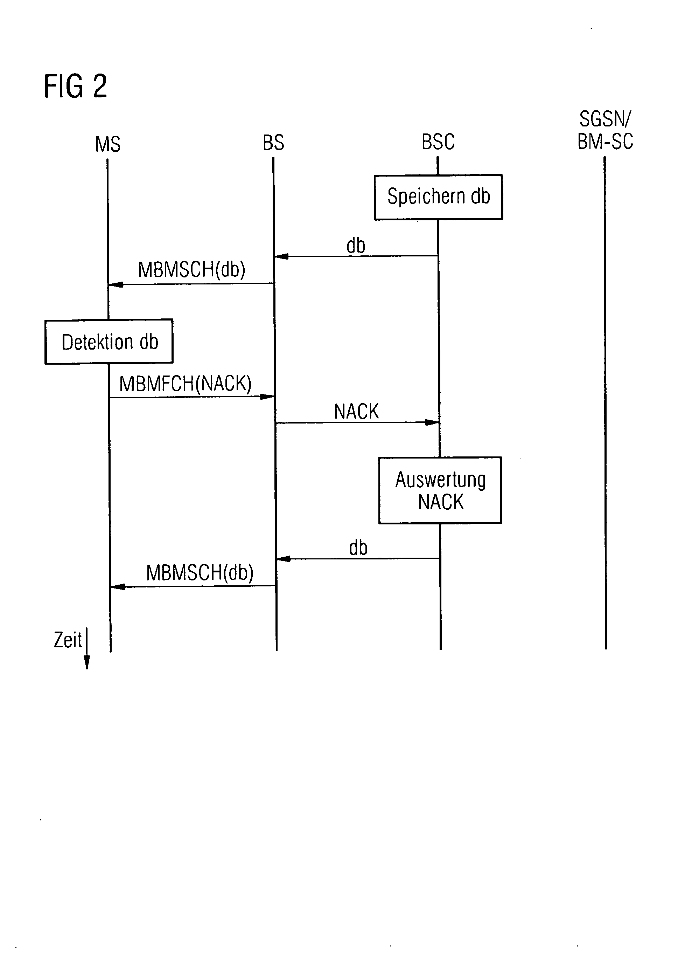

Die Aufbauprozeduren eines MBMS-Dienstes werden gemäß den in Kapitel 8 in der technischen Spezifikation 3GPP TS 23.246 V1.1.0 (2003-07) beschriebenen Verfahren durchgeführt, und in der folgenden Beschreibung der Figuren nicht nochmals gesondert beschrieben. In den FIG 1 und 2 wird vereinfacht dargestellt, wie ein einzelner Datenblock db von dem Basisstationssystem BSS, bestehend aus einer beispielhaften Basisstations-Steuerung BSC und einer Basisstation BS, zu einer Anzahl von Teilnehmer-Endgeräten MS übertragen wird. Ein nach Aufbau eines MBMS-Kanals über den SGSN bzw. BM-SC in der Basisstations-Steuerung eingehender Datenblock db eines Dienstes wird in einem Speicher M gespeichert und zu der die Teilnehmer-Endgeräte MS versorgenden Basisstation BS weitergeleitet. Wie in der FIG beispielhaft angegeben, kann dieser Speicher M zur Speicherung des Datenblocks db in gleicher Weise in dem SGSN, BM-SC und/oder auch in der Basisstation BS gespeichert werden, wobei eine Speicherung auf einer hohen hierarchischen Ebene vorteilhaft Speicherkosten in den unteren Ebenen erspart, und eine Speicherung auf einer unteren Ebene eine nochmalige Übertragung über mehrere Netzkomponenten erspart.

Zwischen diesen jeweiligen Vor- und Nachteilen ist bei der Anordnung des Speichers abzuwägen. Die Speicherung des Datenblocks db erfolgt bis zu einer erfolgreichen Detektion durch die Teilnehmer-Endgeräte MS oder bis zum Ablauf eines vorgegebenen Zeitintervalls , in dem wiederholte Übertragungen durchgeführt werden können bzw. Erreichen einer vorgegebenen maximalen Anzahl von Wiederholungen.

Von der Basisstation BS wird der Datenblock db in einem aufgebauten speziellen MBMS-Kanal MBMSCH über die Funkschnittstelle zu der Anzahl von Teilnehmer-Endgeräten MS übertragen und von diesen empfangen und detektiert. Erkennt, wie in FIG 1 und 2 dargestellt, eine oder mehrere der empfangenden Teilnehmer-Endgeräte MS, dass der Datenblock db nicht korrekt empfangen bzw. detektiert werden konnte, oder dass trotz der Ankündigung beim Aufbau des MBMS kein Datenblock empfangen wurde, signalisiert das jeweilige Teilnehmer-Endgerät MS dieses in einem dem MBMS-Kanal MBMSCH zugeordneten Rückkanal MBMSFCH (MBMS Feedback Channel). Die Signalisierung des nicht korrekten Empfangs erfolgt dabei beispielsweise mittels einer von ARQ-Verfahren bekannten negativen Bestätigungs-Signalisierung NACK (Non-Acknowledgement). Diese negative Bestätigungs-Signalisierung NACK kann dabei vorteilhaft in Form von Funkblöcken erfolgen, die Zugriffsblöcken, so genannten RACH-Bursts, entsprechen bzw. Eigenschaften von Zugriffsblöcken aufweisen. Derartige Eigenschaften sind beispielsweise eine lange Trainingssequenz zur verbesserten Detektion bei Auftreten von Kollisionen mit weiteren Signalisierungen sowie eine kurze Gesamtlänge, sodass eine nur grobe Synchronität mit der Zeitstruktur der sendenden Basisstation BS erforderlich ist. Eine ausschließliche Signalisierung von negativen Bestätigungen NACK besitzt den Vorteil, dass die Signalisierungslast in dem Rückkanal begrenzt und damit einhergehend die Wahrscheinlichkeit von Kollisionen der Signalisierungen von zufallsgesteuert auf den Rückkanal zugreifenden Teilnehmer-Endgeräten verringert wird.

Die Effizienz der Nutzung des Rückkanals MBMSFCH kann weiterhin dadurch gesteigert werden, dass ein gemeinsamer Rückkanal für mehrere physikalische MBMS-Kanäle, die einen logischen MBMS-Kanal bilden, vorgesehen wird. Im beispielhaften Fall der Anwendung der Erfindung in einem GPRS-System wird ein Datenblock in vier Funkblöcken übertragen. Entsprechend kann beispielsweise jedem von vier physikalischen MBMS-Kanälen jeweils ein Funkblock des Rückkanals zugeordnet werden, welcher ebenfalls vier Funkblöcke in der Zeitdauer eines Datenblocks aufweist, wovon jedoch jeweils einer für die Übertragung eines Zugriffsfunkblocks zur Signalisierung von einen Datenblock betreffenden Statusinformationen ausreicht. Alternativ oder ergänzend kann bei einer Konfiguration mit einem Rückkanal für jeden MBMS-Kanal der Zugriff der Teilnehmer-Endgeräte auf die einzelnen Funkblöcke ebenfalls zufallsgesteuert erfolgen, wodurch vorteilhaft die Wahrscheinlichkeit von Kollisionen weiter verringert wird. Ist die Anzahl von Teilnehmern sehr groß, obliegt es dem Funksystem ferner, nur eine bestimmte Anzahl oder Gruppe von Teilnehmer-Endgeräten zur Signalisierung von negativen Bestätigungen aufzufordern, um so die Wahrscheinlichkeit von Kollisionen und die Signalisierungslast auf dem Rückkanal zu verringern. Dieses Verfahren ist auch unter dem Begriff Polling bekannt.

Nach Auswertung der negativen Bestätigungs-Signalisierung NACK in der Basisstations-Steuerung BSC erfolgt nachfolgend eine nochmalige Übertragung des gespeicherten Datenblocks db zu der Basisstation BS und Aussendung in dem MBMS-Kanal MBMSCH zu den Teilnehmer-Endgeräten MS. Die Auswertung der Informationen der Teilnehmer-Endgeräte, in dem beschriebenen Fall die negativen Bestätigungs-Signalisierungen, durch die Funkverbindungs-Steuerung (RLC, Radio Link Control) in der Basisstations-Steuerung BSC kann dabei derart erfolgen, dass erst ab einer bestimmten Anzahl empfangener NACKs für einen Datenblock ein nochmaliges Versenden dieses Datenblocks initiiert wird. Kann keine der negativen Bestätigungs-Signalisierungen, beispielsweise aufgrund von Kollisionen beim Zugriff auf den gemeinsamen Rückkanal MBMSFCH, von der Basisstation BS empfangen werden, ist alternativ auch eine einfache Ermittlung des Empfangspegels auf dem Rückkanal ausreichend, um einen Bedarf der Teilnehmer-Endgeräte an einer wiederholten Übertragung des Datenblocks zu bestimmen. Dabei ist es vorteilhaft, nach jeder Übertragung eines Datenblocks db ein bestimmtes Zeitintervall vorzusehen, in der die Teilnehmer-Endgeräte Statusinformationen NACKs zu der versorgenden Basisstation BS signalisieren können. Hierdurch kann von einer Angabe von Nummern der Datenblöcke db in der Signalisierung der Teilnehmer-Endgeräte abgesehen werden, da der zeitliche Zusammenhang zwischen der Aussendung des jeweiligen Datenblocks und Aussendung einer korrespondierende Statusinformation nicht verändert wird.

Die Anzahl empfangener negativer Bestätigungs-Signalisierungen NACK zur Initiierung einer wiederholten Aussendung des Datenblocks db kann vorteilhaft abhängig von dem Dienst bzw. den Anforderungen des Dienstes definiert werden. So ist beispielsweise bei Multicast-Diensten, für die Teilnehmer gegebenenfalls hohe Gebühren zahlen, auch bei Empfang nur einer negativen Bestätigung eine nochmalige Übertragung sinnvoll, um Kundenunzufriedenheiten vorzubeugen. Demgegenüber ist bei kostenlosen Diensten eine nochmalige Übertragung beispielsweise erst ab einem bestimmten absoluten oder relativen Anteil nicht korrekt empfangender Teilnehmer-Endgeräte sinnvoll, um die Verzögerungen bzw. Übertragungszeit nicht zu groß werden zu lassen. Die maximale Anzahl wiederholter Übertragungen eines Datenblocks ist in gleicher Weise von dem Dienst bzw. Dienstparametern abhängig konfigurierbar. Dienstqualitäts-Anforderungen (engl. QoS, Quality of Service), wie beispielsweise maximal tolerierte Übertragungsverzögerung bzw. Übertragungszeit und Bit- oder Blockfehlerrate, sind dabei ebenso zu berücksichtigen wie die Art des Dienstes, Echtzeit- oder Nichtechtzeit-Dienst.

Die Tatsache des Empfangs bzw. die Anzahl von Bestätigungs-Signalisierungen der Teilnehmer-Endgeräte MS kann vorteilhaft für eine Sendeleistungsregelung der Übertragung in dem MBMS-Kanal MBMSCH berücksichtigt werden. Empfängt das Basisstationssystem nach einer Aussendung eines Datenblocks db keine negative Bestätigungs-Signalisierung NACK, so wird die Sendeleistung der Basisstation BS für die Aussendung eines nachfolgenden Datenblocks db verringert. Dies erfolgt beispielsweise sukzessiv, bis eine erste oder eine bestimmte Anzahl negativer Bestätigungs-Signalisierungen der Teilnehmer-Endgeräte empfangen wird. Überschreitet die Anzahl der Signalisierungen wiederum einen bestimmten Schwellenwert, wird die Sendeleistung sukzessive wieder erhöht. Durch die gegebenenfalls variable Definition eines unteren und oberen Schwellenwertes kann ein Bereich definiert werden, in dem die Sendeleistung der Basisstation BS variieren kann. Zusätzlich kann abhängig von diesen Auswertungen oder auch einem bestimmten Signalpegel des Rückkanals ausgehend beispielsweise eine maximale Sendeleistung der Teilnehmer-Endgeräte MS definiert und zu den Teilnehmer-Endgeräten MS signalisiert werden, wodurch vorteilhaft die Interferenzbeeinflussung paralleler Signalübertragungen verringert werden kann.

## Patentansprüche

1. Verfahren zur Datenübertragung in einem Funk-Kommunikationssystem, bei dem
von einer Basisstation (BS) zumindest ein Datenblock (db) zu einer Anzahl von Teilnehmer-Endgeräten (MS) gemäß einer Punkt-zu-Multipunkt-Übertragung gesendet wird,
**dadurch gekennzeichnet, dass**
von der Basisstation (BS) eine explizite Anforderung zur Signalisierung einer Information (NACK) bezüglich des jeweiligen Empfangs des Datenblocks (db) zu einer ausgewählten Gruppe der Anzahl empfangender Teilnehmer-Endgeräte (MS) gesendet wird, und
von der Basisstation (BS) in Abhängigkeit der von der ausgewählten Gruppe Teilnehmer-Endgeräte (MS) empfangenen Information (NACK) bezüglich des jeweiligen Empfangs des Datenblocks (db) zumindest eine nochmalige Übertragung des Datenblocks (db) initiiert wird.

2. Verfahren nach Anspruch 1, bei dem
der Datenblock (db) einem unidirektionalen Broadcast- und/oder Multicast-Dienst zugeordnet ist, und in einem dem Broadcast und/oder Multicast-Dienst zugeordneten Kanal (MBMSCH) übertragen wird.

3. Verfahren nach einem vorhergehenden Anspruch, bei dem
die Information (NACK) bezüglich des Empfangs des Datenblocks (db) in einem von der Anzahl von Teilnehmer-Endgeräten (MS) gemeinsam nutzbaren Kanal (MBMSFCH) zu der Basisstation (BS) signalisiert wird.

4. Verfahren nach einem vorhergehenden Anspruch, bei dem
als Information (NACK) ein Zugriffsfunkblock oder ein zumindest eine Anzahl von Eigenschaften eines Zugriffsfunkblocks aufweisender Signalisierungsfunkblock übertragen wird.

5. Verfahren nach einem vorhergehenden Anspruch, bei dem
die Information (NACK) bezüglich des Empfangs des Datenblocks (db) einen nicht korrekten oder nicht erfolgten Empfang des Datenblocks (db) signalisiert.

6. Verfahren nach Anspruch 1, bei dem
abhängig von einem Dienst und/oder dem Dienst zugeordneten Parametern netzseitig eine nochmalige Übertragung des Datenblocks (db) initiiert wird.

7. Verfahren nach einem vorhergehenden Anspruch, bei dem eine Übertragung eines nachfolgenden Datenblocks (db) nach einem vorgegebenen Zeitintervall zum Empfangen der Information (NACK) eines der Anzahl Teilnehmer-Endgeräte (MS) erfolgt.

8. Verfahren nach einem vorhergehenden Anspruch, bei dem abhängig von der Information (NACK) oder eines durch die Information am Ort der Basisstation (BS) verursachten Empfangsstärke eine Sendeleistung der Basisstation (BS) gesteuert wird.

9. Funk-Kommunikationssystem, mit
zumindest einer Basisstation zum Übertragen eines Datenblocks (db) zu einer Anzahl von Teilnehmer-Endgeräten (MS) in einem Versorgungsbereich (C) der Basisstation (BS) gemäß einer Punkt-zu-Multipunkt-Übertragung und zum Übertragen einer expliziten Anforderung zur Signalisierung einer Information (NACK) bezüglich eines jeweiligen Empfangs des Datenblocks (db) zu einer ausgewählten Gruppe der Anzahl Teilnehmer-Endgeräte (MS), und
zumindest einer Einrichtung (BSC, SGSN) zum Auswerten der von der ausgewählten Gruppe Teilnehmer-Endgeräte (MS) empfangenen Information (NACK) bezüglich des jeweiligen Empfangs des Datenblocks (db) und zum Initiieren zumindest einer nochmaligen Übertragung des Datenblocks (db) zu der Anzahl Teilnehmer-Endgeräte (MS) in Abhängigkeit von einem Ergebnis der Auswertung.

10. Funk-Kommunikationssystem nach dem vorhergehenden Anspruch, wobei
die Einrichtung (BSC, SGSN) eine Speichereinrichtung (M) zum Vorhalten des Datenblocks (db) zur nochmaligen Übertragung zu der Anzahl Teilnehmer-Endgeräte (MS) aufweist.

11. Basisstation (BS) eines Funk-Kommunikationssystems, aufweisend
Mittel zum Senden zumindest eines Datenblocks (db) zu einer Anzahl von Teilnehmer-Endgeräten (MS) in einem Versorgungsbereich (C) der Basisstation (BS) gemäß einer Punkt-zu-Multipunkt-Übertragung und zum Senden einer expliziten Anforderung zur Signalisierung einer Information (NACK) bezüglich eines jeweiligen Empfangs des Datenblocks (db) zu einer ausgewählten Gruppe der Anzahl Teilnehmer-Endgeräte (MS), und
Mittel zum Empfangen der Information (NACK) bezüglich des jeweiligen Empfangs des Datenblocks (db) der ausgewählten Gruppe Teilnehmer-Endgeräte (MS),
wobei die Mittel zum Senden ausgestaltet sind zum nochmaligen Senden des Datenblocks (db) in Abhängigkeit der von der ausgewählten Gruppe Teilnehmer-Endgeräte (MS) empfangenen Information (NACK).

12. Teilnehmer-Endgerät (MS), aufweisend
Mittel zum Empfangen zumindest eines von einer Basisstation eines Funk-Kommunikationssystems gemäß einer Punkt-zu-Multipunkt-Übertragung zu einer Anzahl Teilnehmerendgeräten gesendeten Datenblocks (db) und einer an eine ausgewählte Gruppe der Anzahl Teilnehmer-Endgeräte gesendeten expliziten Anforderung zur Signalisierung einer Information (NACK) bezüglich eines Empfangs des Datenblocks (db),
Mittel zum Generieren der Information (NACK) bezüglich des Empfangs des Datenblocks (db), und
Mittel zum Signalisieren der Information (NACK) bezüglich des Empfangs des Datenblocks (db) zu der Basisstation (BS).

## Claims

1. Method for data transmission in a radio communication system, wherein
at least one data block (db) is sent from a base station (BS) to a number of subscriber terminals (MS) in accordance with a point-to-multipoint transmission,
**characterised in that**
an explicit prompt to signal information (NACK) concerning the respective receipt of the data block (db) is sent from the base station (BS) to a selected group of the number of receiving subscriber terminals (MS), and
depending on the information (NACK) concerning the respective receipt of the data block (db), said information being received from the selected group of subscriber terminals (MS), at least one re-transmission of the data block (db) is initiated by the base station (BS).

2. Method according to claim 1, wherein
the data block (db) is assigned to a unidirectional broadcast and/or multicast service and is transmitted in a channel (MBMSCH) which is assigned to the broadcast and/or multicast service.

3. Method according to one of the preceding claims, wherein the information (NACK) relating to the receipt of the data block (db) is signalled to the base station (BS) in a channel (MBMSFCH) which can be utilised jointly by the number of subscriber terminals (MS).

4. Method according to one of the preceding claims, wherein an access burst or a signalling burst having at least a number of properties of an access burst is transmitted as information (NACK).

5. Method according to one of the preceding claims, wherein the information (NACK) relating to the receipt of the data block (db) signals an incorrect receipt or no receipt of the data block (db).

6. Method according to claim 1, wherein
a re-transmission of the data block (db) is initiated on the network side depending on a service and/or parameters assigned to the service.

7. Method according to one of the preceding claims, wherein a transmission of a subsequent data block (db) takes place after a predetermined time interval for receiving the information (NACK) from one of the subscriber terminals (MS).

8. Method according to one of the preceding claims, wherein a transmission power of the base station (BS) is controlled depending on the information (NACK) or a receive strength which is caused by the information at the location of the base station (BS).

9. Radio communication system, including
at least one base station for transmitting a data block (db) to a number of subscriber terminals (MS) in a coverage area (C) of the base station (BS) in accordance with a point-to-multipoint transmission, and for transmitting an explicit prompt to a selected group of the number of subscriber terminals (MS) to signal an information item (NACK) relating to a respective receipt of the data block (db), and
at least one entity (BSC, SGSN) for analysing the information (NACK) which relates to the respective receipt of the data block (db) and is received from the selected group of subscriber terminals (MS), and for initiating at least one re-transmission of the data block (db) to the number of subscriber terminals (MS) depending on a result of the analysis.

10. Radio communication system according to one of the preceding claims, wherein
the entity (BSC, SGSN) includes a storage entity (M) for holding the data block (db) for re-transmission to the number of subscriber terminals (MS).

11. Base station (BS) of a radio communication system, including
means for transmitting at least one data block (db) to a number of subscriber terminals (MS) in a coverage area (C) of the base station (BS) in accordance with a point-to-multipoint transmission, and for transmitting an explicit prompt to a selected group of the number of subscriber terminals (MS) to signal an information item (NACK) relating to a respective receipt of the data block (db), and means for receiving the information (NACK), said information relating to the respective receipt of the data block (db), from the selected group of the subscriber terminals (MS),
wherein the means for transmitting are configured for re-transmission of the data block (db) depending on the information (NACK) which is received from the selected group of subscriber terminals (MS).

12. Subscriber terminal (MS), including
means for receiving at least one data block (db) which is transmitted by a base station (BS) of a radio communication system to a number of subscriber terminals in accordance with a point-to-multipoint transmission, and for receiving an explicit prompt, this being transmitted to a selected group of the number of subscriber terminals, to signal an information item (NACK) relating to a receipt of the data block (db), means for generating the information (NACK) relating to the receipt of the data lock (db), and
means for signalling the information (NACK), which relates to the receipt of the data block (db), to the base station (BS).

## Revendications

1. Procédé pour la transmission de données dans un signal de communication radio, dans lequel
au moins un bloc de données (db) est envoyé par une station de base à un certain nombre de terminaux d'abonnés (MS) selon une transmission point à multipoint,
**caractérisé en ce que**
une demande explicite de signalisation d'une information (NACK) concernant la réception respective du bloc de données (db) à un groupe sélectionné du nombre de terminaux d'abonnés (MS) récepteurs est envoyée par la station de base (BS), et
au moins une nouvelle transmission du bloc de données (db) est initiée par la station de base (BS) en fonction de l'information (NACK) reçue du groupe sélectionné de terminaux d'abonnés (MS) en ce qui concerne la réception respective du bloc de données (db).

2. Procédé selon la revendication 1, dans lequel
le bloc de données (db) est attribué à un service Broadcast et/ou un service Multicast unidirectionnel, et est transmis dans un canal (MBMSCH) attribué au service Broadcast et/ou service Multicast.

3. Procédé selon les revendications précédentes, dans lequel l'information (NACK) concernant la réception du bloc de données (db) est signalée dans un canal (MBMSFCH) pouvant être utilisé en commun par le nombre de terminaux d'abonnés (MS) à la station de base (BS).

4. Procédé selon une revendication précédente, dans lequel
un bloc radio d'accès ou au moins un certain nombre de propriétés d'un bloc radio de signalisation présentant des blocs radio d'accès est transmis comme information (NACK).

5. Procédé selon une revendication précédente, dans lequel
l'information (NACK) concernant la réception du bloc de données (db) signale une réception non correcte ou non effectuée du bloc de données (db).

6. Procédé selon la revendication 1, dans lequel
une nouvelle transmission du bloc de données (db) est initiée côté réseau en fonction d'un service et/ou de paramètres attribués au service.

7. Procédé selon une revendication précédente, dans lequel
une transmission d'un bloc de données (db) consécutif s'effectue après un intervalle de temps prédéfini pour la réception de l'information (NACK) de l'un d'un nombre de terminaux d'abonnés (MS).

8. Procédé selon une revendication précédente, dans lequel
une puissance d'émission de la station de base est commandée en fonction de l'information (NACK) ou d'une intensité de réception provoquée par l'information à l'emplacement de la station de base (BS).

9. Système de communication radio, comportant
au moins une station de base pour la transmission d'un bloc de données (db) à un certain nombre de terminaux d'abonnés (MS) dans une zone de couverture (C) de la station de base (BS) selon une transmission point à multipoint et pour la transmission d'une demande explicite de signalisation d'une information (NACK) concernant une réception respective du bloc de données (db) à un groupe sélectionné du nombre de terminaux d'abonnés (MS), et
au moins un appareil (BSC, SGSN) pour l'analyse d'information (NACK) reçue du groupe sélectionné de terminaux d'abonnés (MS) concernant la réception respective du bloc de données (db) et pour l'initiation d'au moins une nouvelle transmission du bloc de données (db) au nombre de terminaux d'abonnés (MS) en fonction d'un résultat de l'analyse.

10. Système de communication radio selon la revendication précédente,
l'appareil (BSC, SGSN) présentant un dispositif de stockage (M) pour la mise à disposition du bloc de données (db) pour la nouvelle transmission au nombre de terminaux d'abonnés (MS).

11. Station de base (BS) d'un système de communication radio, présentant des moyens pour l'envoi d'au moins un bloc de données (db) à un nombre de terminaux d'abonnés (MS) dans une plage de couverture (C) de la station de base (BS) selon une transmission point à multipoint et pour l'envoi d'une demande explicite de signalisation d'une information (NACK) concernant une réception respective du bloc de données (db) à un groupe sélectionné du nombre de terminaux d'abonnés (MS), et des moyens pour la réception de l'information (NACK) concernant la réception respective du bloc de données (db) du groupe sélectionné de terminaux d'abonnés (MS),
les moyens pour l'envoi étant conçus pour le nouvel envoi du bloc de données (db) en fonction de l'information (NACK) reçue du groupe sélectionné des terminaux d'abonnés (MS).

12. Terminal d'abonnés (MS) présentant des moyens pour la réception d'au moins un bloc de données (db) envoyé d'une station de base d'un système de communication radio selon une transmission point à multipoint à un certain nombre de terminaux d'abonnés et d'une demande explicite, envoyée à un groupe sélectionné du nombre de terminaux d'abonnés, pour la signalisation d'une information (NACK) concernant un envoi du bloc de données (db),
des moyens pour générer l'information (NACK) concernant la réception du bloc de données (db), et
des moyens pour la signalisation de l'information (NACK) concernant la réception du bloc de données (db) à la station de base (BS).
